Europäisches Patentamt

European Patent Office

Office européen des brevets

(19)

(11) Publication number: **0 049 983**
**B1**

(12) # EUROPEAN PATENT SPECIFICATION

(45) Date of publication of patent specification: **10.04.85**

(21) Application number: **81304587.9**

(22) Date of filing: **05.10.81**

(51) Int. Cl.⁴: **E 05 C 19/14,** B 60 J 7/10, E 05 B 65/12

(54) **Latches for panels.**

(30) Priority: **14.10.80 GB 8033104**

(43) Date of publication of application:
**21.04.82 Bulletin 82/16**

(45) Publication of the grant of the patent:
**10.04.85 Bulletin 85/15**

(84) Designated Contracting States:
**DE FR GB IT**

(56) References cited:
**GB-A-2 027 792**
**US-A-3 603 636**
**US-A-3 618 995**
**US-A-3 974 753**
**US-A-4 216 983**

(73) Proprietor: **Britax Weathershields Limited**
**Burgess House 1270 Coventry Road Yardley**
**Birmingham B25 8BB (GB)**

(72) Inventor: **Fisher, Sidney Edward**
**645 Fox Hollies Road**
**Hall Green Birmingham B28 9DW (GB)**

(74) Representative: **Hollinghurst, Antony**
**Britax Central Services 40 Granby Avenue**
**Garretts Green Birmingham, B33 0SJ (GB)**

Courier Press, Leamington Spa, England.

## Description

This invention relates to latches for panels intended to close an opening in a structure and more particularly to latches for panels of the foregoing type in which the panel is movable between a closed and a normal fully opened position but with provision for opening beyond the normal fully opened position.

The invention is particularly, but not exclusively, applicable to opening roofs for vehicles of the kind in which a frame is provided for surrounding an aperture in the roof of a vehicle and a rigid panel, conveniently of glass, is hinged to the forward edge of the frame and is coupled to the rear edge of a latch which is releasable to enable the panel to be hinged into a normal open position. In such opening roofs, the hinges are frequently constructed so as to allow the panel to be completely removed from the frame and it is necessary to provide a latch which is also completely detachable.

One type of latch for a hinged panel, mounted in a frame, which has hitherto been used in opening roofs of the foregoing type, comprises an over-centre toggle link, having a first element connected to the panel by a first pivot pin and a second element connected to the frame by a second pivot pin and to the first element by a third pivot pin so as to be movable between a closed position in which the two elements are aligned in overlapping relationship with each other and an open position held together in aligned end-to-end relationship with each other, the connection of one of the elements to one of its pivot pins being detachable.

A latch of this type is disclosed in Patent Specification US—A—3974753. The pivot pin of the detachable connection is withdrawable axially to permit complete removal of the panel but this operation is time-consuming and inconvenient. The present invention is concerned with the provision of a latch which requires a relatively simple operation to permit removal.

According to the invention, the detachable connection of one of the said elements to one of its pivot pins comprises an open-ended slot in said element and a retention lever pivotally mounted on said element having a hook-like formation adapted to engage with said one pivot pin to retain it in the slot, the hook-like formation being provided with resilient means for biasing it into a position to inhibit movement out of its engaged position.

The retention lever may conveniently be mounted on the other pivot pin connected to said one element. In one form of the invention, the retention lever is formed of synthetic plastics material, the resilience of which serves to bias the hook-like formation into said position inhibiting movement thereof out of its engaged position.

An embodiment of the invention will now be described, by way of example, with reference to the accompanying drawings, in which:

Figure 1 is a perspective view of the top of a motor car fitted with an opening roof of the type referred to above.

Figure 2 is a cross-sectional view of a latch in accordance with the invention fitted to the opening roof illustrated in Figure 1, the latch being in the closed position.

Figure 3 is a cross-sectional view similar to Figure 1 but with the opening roof in its normal open position and with the hook-like formation released prior to complete removal of the panel, and

Figure 4 is a cross-sectional view, similar to Figure 2 and 3 but just after separation of the two parts of the latch from one another.

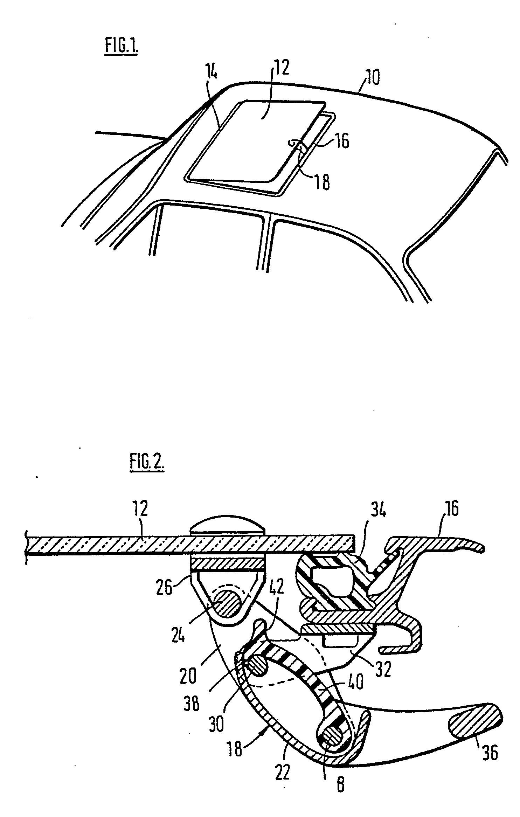

Referring to Figure 1, a motor car 10 has an opening roof comprising a panel 12 hinged along its leading edge 14 to a frame 16 bounding an aperture in the roof of the vehicle 10. The hinges (not shown) are constructed so as to permit the panel 12 to be unhooked after it has been opened well beyond its normal open position, as shown in Figure 1. A latch 18 at the rear of the panel 12 is arranged to hold the panel 12 either in the normal open position as illustrated or in the fully closed position and also to allow complete removal of the panel 12.

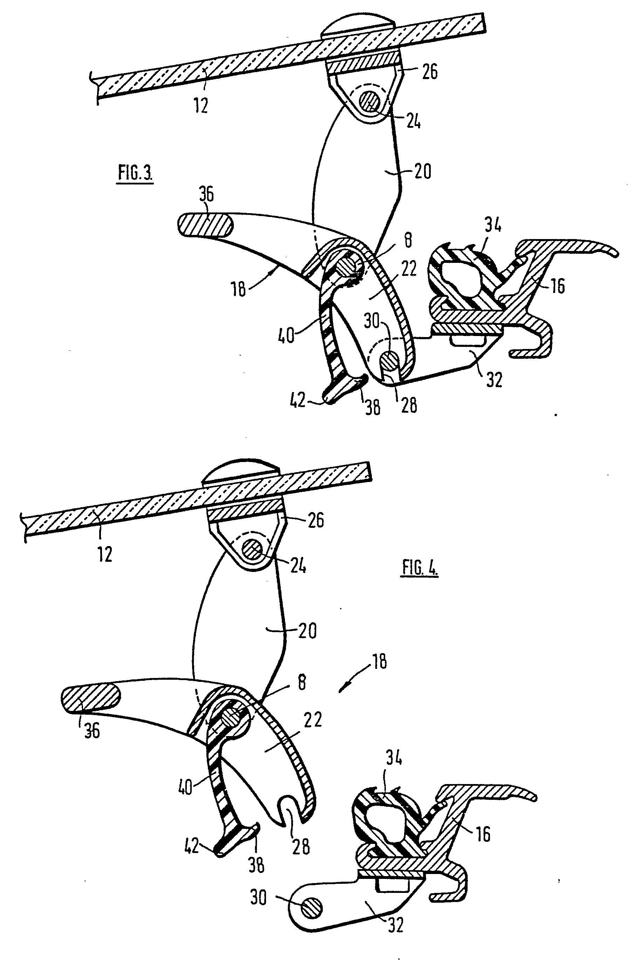

Referring to Figures 2, 3 and 4, the latch 18 comprises a first toggle link 20 and a second toggle link 22. The toggle link 20 is pivotally connected, by a pin 24 to a base member 26 which is attached to the panel 12. The other toggle line 22 is connected to the toggle link 20 by a pivot pin 8. The toggle link 22 also has a slot 28 (Figures 3 and 4) which, when the panel 12 is in its fully closed or normal open position, engages with a pivot pin 30 mounted on a bracket 32 which is attached to the rear edge of the frame 16. The frame 16 also carries a resilient seal member 34 which, when the panel is in its closed position, urges the latter upwardly and provides the necessary resilience against which the toggle mechanism of the latch 18 goes over-centre. The link 22 has an elongated end portion which provides an operating handle 36 for opening and closing the panel 12.

In normal operation, the pivot pin 30 is held in position in the slot 28 by a hook-like formation 38 on a retention lever 40 which is pivotally mounted on the pin 8. The retention lever 40 is formed of plastics material, the resilience of which is sufficient to hold the hook-like formation 38 in engagement with the pivot pin 30 while permitting it to be snapped out of and back into engagement. A projection 42 opposite to the hook-like formation 38 provides a finger-grip which can be used to cause flexing of the lever 40 to permit disengagement of the hook-like formation 38.

In normal operation, the panel 12 can be moved between its closed and its normal open position merely by operation of the handle 36. When complete removal of the panel 12 is required, it is first opened to its normal open position. Next, by pressure on the projection 42, the hook-like formation 38 is disengaged to bring the mechanism into the configuration illustrated in Figure 3. The link 22 can now be separated from the pivot pin 30, as shown in Figure 4 and the panel 12 further opened to an angle at which the hinges (not shown) at the leading edge 14 (Figure 1) thereof can be unhooked.

The force exerted on the pivot pin 30 due to the resilience of the retention lever 40 is sufficient to prevent rattling between the pin 30 and the link 18, thereby avoiding the need to take other precautions against rattles at this location.

**Claims**

1. A latch (18) for a hinged panel (12) mounted in a frame (16), comprising a toggle link having a first element (20) connected to the panel (12) by a first pivot pin (24), and a second element (22) connected to the frame (16) by a second pivot pin (30) and to the first element (20) by a third pivot pin (8) so as to be movable between a closed position in which the two elements (20 and 22) are aligned in overlapping relationship with each other and an open position in which the two elements (20 and 22) are held together in aligned end-to-end relationship with each other, the connection of one of said elements (22) to one of its pivot pins (30) being detachable, characterised in that said detachable connection comprises an open ended slot (28) in said element (22) and a retention lever (40) pivotally mounted on said element (22) and having a hook-like formation (38) adapted to engage with said one pivot pin (30) to retain it in the slot (28), the hook-like formation (38) being provided with resilient means for biasing it into a position to inhibit movement out of its engaged position.

. 2. A latch according to claim 1, characterised in that the retention lever (40) is mounted on the other pivot pin (8) connected to said one element (22).

3. A latch according to claim 1 or 2, characterised in that the retention lever (40) is formed of synthetic plastics material, the resilience of which serves to bias the hook-like formation (38) into said position, inhibiting movement thereof within its engaged position.

4. A latch according to claim 1, 2, or 3, characterised in that the pin (30) which is engaged by the slot (28) is mounted on the frame (16).

**Revendications**

1. Une clenche (18) pour plaque articulée (12) montée dans un cadre (16) comprenant un levier articulé comportant un premier élément (20) relié à la plaque (12) par l'intermédiaire d'un premier axe de rotation (24), et un second élément (22) relié au cadre (16) par l'intermédiaire d'un second axe de rotation (30) et au premier élément (20) par un troisième axe de rotation (8) de manière à être manoeuvrable entre une position de fermeture dans laquelle les deux éléments (20 et 22) sont alignés en position du mutuel recouvrement, et une position d'ouverture dans laquelle les deux éléments (20 et 22) sont maintenus ensemble alignés bout à bout, l'articulation de l'un desdits éléments (22) à l'un desdits axes de rotation (30) étant amovible caractérisée en ce que ledit assemblage amovible comprend une encouche (28) ouverte à l'une de ses extrémités, ménagée dans ledit élément (22) un levier de retenue (40) monté à rotation sur ledit élément (22) et présentant un prolongement en forme de crochet (38) destiné à venir en prise avec l'un desdits axes de rotation (30), de manière à le retenir sous l'encoche (28), le prolongement en forme de crochet (38) étant muni de moyens élastiques pour être forcé dans une position, afin d'empêcher tout déplacement hors de sa position d'engagement.

2. Une clenche selon la revendication 1, caractérisé en ce que le levier de retenue (40) est monté sur l'axe de rotation (8) relié à l'un (22) desdits éléments.

3. Une clenche selon la revendication 1 ou 2, caractérisée en ce que le levier de retenue (40) est réalisé en un matériau plastique synthétique dont l'élasticité permet au prolongement en forme de crochet (38) d'être poussé dans ladite position, en empêchant tout déplacement de celui-ci dans sa position d'engagement.

4. Une clenche selon la revendication 1, 2 ou 3, caractérisée en ce que l'axe (30) qui vient s'engager dans l'encoche (28) est fixé sur le cadre (16).

**Patentansprüche**

1. Riegel (18) für eine angelenkte Platte (12), die an einem Rahmen (16) befestigt ist, mit einem Kniehebelgelenk mit einem ersten Element (20), das an der Platte (12) über einen Schwenkzapfen (24) angelenkt ist und einem zweiten Element (22), das über einen zweiten Schwenkzapfen (30) am Rahmen (16) und über einen dritten Schwenkzapfen (8) am ersten Element (20) angelenkt ist, um bewegbar zu sein zwischen einer geschlossenen Stellung, in der die zwei Elemente (20) und (22) einander überlappend ausgerichtet sind und einer offenen Stellung, in der die zwei Elemente (20) und (22) in einer Ende-an-Ende-Stellung zueinander ausgerichtet gehalten sind, wobei die Verbindung eines der Elemente (22) mit einem der Schwenkzapfen (30) lösbar ist, dadurch gekennzeichnet, daß die lösbare Verbindung einen Schlitz (28) mit offenem Ende im Element (22) und einen Rückhalthebel (40) aufweist, der am Element (22) angelenkt ist und ein hakenförmiges Teil (38) aufweist, das in Eingriff mit dem Schwenkzapfen (30) bringbar ist, um ihn im Schlitz (28) zurückzuhalten, wobei das hakenförmige Teil (38) mit einer elastischen Vorrichtung versehen ist, die es in eine Stellung vorspannt, die eine Bewegung aus der Eingriffsstellung verhindert.

2. Riegel nach Anspruch 1, dadurch gekennzeichnet, daß der Rückhalthebel (40) am dritten Schwenkzapfen (8) befestigt ist, der mit dem einen Element (22) verbunden ist.

3. Riegel nach einem der Ansprüche 1 oder 2, dadurch gekennzeichnet, daß der Rückhalthebel (40) aus synthetischem Plastikmaterial besteht, dessen Elastizität dazu dient, das hakenförmige Teil (38) in die Stellung vorzuspannen, wodurch eine Bewegung aus der Eingriffsstellung verhindert wird.

4. Riegel nach einem der Ansprüche 1, 2 oder 3, dadurch gekennzeichnet, daß der Schwenkzapfen (30), der in Eingriff mit dem Schlitz (28) kommt, am Rahmen (16) befestigt ist.

FIG.1.

FIG.2.

FIG.3.

FIG. 4.